(19) **Europäisches Patentamt / European Patent Office / Office européen des brevets**

(11) **EP 4 764 985 A1**

(12) **EUROPEAN PATENT APPLICATION**

(43) Date of publication:
24.06.2026 Bulletin 2026/26

(21) Application number: 25204861.6

(22) Date of filing: 26.09.2025

(51) International Patent Classification (IPC):
**G06Q 10/04** $^{(2023.01)}$

(52) Cooperative Patent Classification (CPC):
**G06Q 10/04; G06Q 10/06311; G06Q 30/0206; G06Q 50/06**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **23.12.2024 KR 20240193827**
**16.04.2025 KR 20250049819**

(71) Applicant: **REC's Innovation Co., Ltd.**
**Naju-si, Jeollanam-do 58326 (KR)**

(72) Inventor: **IM, Jung Min**
**58215 Naju-si, Jeollanam-do (KR)**

(74) Representative: **Jung, Minkyu**
**Wuesthoff & Wuesthoff**
**Patentanwälte und Rechtsanwalt PartG mbB**
**Schweigerstraße 2**
**81541 München (DE)**

(54) **VIRTUAL POWER PLANT SYSTEM BASED ON SELF-DEMAND RESPONSE**

(57) Embodiments provide a virtual power plant system based on self-demand response. A system according to an embodiment relates to a virtual power plant system that analyzes in real time at least one of power demand data, power generation amount data, electricity price data, and distributed power information and provides the result of the analysis in order to enable an individual consumer to perform self-demand response (Self-DR) using a user terminal.

EP 4 764 985 A1

**Description**

BACKGROUND

Technical Field

The present disclosure relates to a virtual power plant system that optimizes AI and an Energy Storage System (ESS) on the basis of self-demand response and efficiently performs wholesale and retail power trading. The system includes an optimization engine that forecasts power demand based on AI, optimizes charging and discharging of an energy storage system using reinforcement learning, and optimizes P2P power trading and wholesale and retail power trading using blockchain smart contracts.

This patent is the result of research conducted with the support of the 2024 Jeollanam-do and Jeonnam Technopark Foundation's regional demand-customized research and development project.
This Patent has been written with the support of Jeollanam-do ('2024 R&D supporting program' operated by Jeonnam Technopark)

Description of the Related Art

Due to the recent continuous increase in power consumption and the expansion of renewable energy resources including solar and wind power, securing both the stability and the efficiency of the power grid has emerged as a major challenge. Since renewable energy is characterized by rapid fluctuations in output depending on climate conditions, flexible operation of the power grid based on real-time forecast of energy generation and consumption is essential.

The existing power system relies on a centralized control structure and thus fails to sufficiently reflect the power usage patterns or demand fluctuations of individual consumers. Accordingly, Demand Response (DR) technology, which allows for active control of power demand, has been introduced. However, it operates on the basis of fixed plans or limited data and is limited in its ability to provide autonomous responses optimized for individual users.

Meanwhile, with the enforcement of the Special Act on the Promotion of Distributed Energy, an institutional foundation that enables individual consumers to trade the power they produce has been established, and accordingly, peer-to-peer (P2P) power trading and participation in the retail power market are becoming available. In response to these institutional changes, the need for an autonomous and optimized power trading system that integrates artificial intelligence (AI), energy storage systems, and blockchain technology is increasing.

SUMMARY

Embodiments of the present disclosure provide a virtual power plant system that optimizes AI and an Energy Storage System (ESS) on the basis of self-demand response and efficiently performs wholesale and retail power trading.

The technical problems to be achieved in the embodiments are not limited to the above-described matters, and other technical problems not mentioned may be considered by those skilled in the art on the basis of various embodiments to be described below.

In order to achieve the objectives, a system according to an embodiment of the present disclosure is a virtual power plant system that analyzes in real time at least one of power demand data, power generation amount data, electricity price data, and distributed power information and provides the result of the analysis in order to enable an individual consumer to perform self-demand response (Self-DR) using a user terminal. The virtual power plant system includes: a transaction management unit that calculates power demand and supply on the basis of the electricity price data, the power generation amount data received from a power plant, and weather data received from an external server, forecasts an appropriate electricity price on the basis of the calculation result, and generates a smart contract, in which the power generation amount data includes reliable power generation amount data received from a reliable power plant and green power generation amount data received from a green power plant; a power management unit that generates the distributed power information on the basis of at least one of the power state data received from an energy storage system, the electricity price data, the power generation amount data, and the weather data, generates charging and discharging schedule information on the basis of the distributed power information, and transmits the charging and discharging schedule information to the energy storage system; and a scheduling unit that an analyzes time-based power consumption pattern and a preference on the basis of power demand data and power consumption data received from a consumer terminal, generates demand forecast data, and generates a consumer-customized schedule on the basis of the demand forecast data.

The trading management unit may receive the electricity price data from a power exchange and transmit the smart contract to the power exchange.

The virtual power plant system further includes: an emergency response unit that detects in real time whether an emergency state has occurred; and a notification unit that transmit san emergency notification to an administrator and the consumer terminal when the emergency state occurs, wherein the emergency state includes at least one of a power plant failure, a surge in power demand, and a worsening weather condition.

The scheduling unit may generate consumer-customized schedule information on the basis of the power demand data and the electricity price data, the power demand data may include peak period demand data and off-peak period demand data, the electricity price data may include price data during the peak period and price data during the off-peak period, and the customer-customized schedule information may include a schedule for reducing costs during the peak period.

The scheduling unit may generate the customer-customized schedule information using a power trading optimization algorithm of an artificial intelligence unit.

BRIEF DESCRIPTION OF THE DRAWINGS

FIG. 1 is a diagram schematically illustrating a network environment in which a virtual power plant system according to an embodiment of the present disclosure is connected;
FIG. 2 is a block diagram for describing the configuration of the virtual power plant system of FIG. 1;
FIG. 3 is a block diagram for describing the configuration of the artificial intelligence unit of FIG. 2;
FIG. 4 is a diagram exemplarily showing the multilayer neural network of FIG. 3;
FIG. 5 is a block diagram for describing the structure of the energy storage system of FIG. 1;
FIG. 6 is a flowchart for describing a method of generating and providing a schedule by a scheduling unit according to an embodiment of the present disclosure; and
FIG. 7 is a flowchart for describing a method of generating charging and discharging schedules according to an embodiment of the present disclosure.

DETAILED DESCRIPTION

The following embodiments are combinations obtained by combining the components and characteristics of embodiments. Each component or feature, unless specifically stated, may be considered as being selective. Each component or feature may be implemented in a type in which they are not combined with other components or features. Further, various embodiments may be achieved by combining some components and/or features. The orders of operations described in various embodiments may be changed. Some components or features of any embodiment may be included in another embodiment and may be replaced with corresponding configurations and features of another embodiment.

In the description of the drawings, procedures or steps that may obscure the gist of various embodiments are not described, and procedures or steps that can be understood by those skilled in the art without difficulty are also not described.

Throughout the specification, unless explicitly described otherwise, "comprising" or "including" any components will be understood to imply the inclusion of other components rather than the exclusion of any other components. Further, terms '~er', '~unit', '~module', etc. used herein mean the units for processing at least one function or operation and may be implemented by hardware, software, or a combination of hardware and software. Further, "a" or "an," "one," "the," and similar terms may be used in the context of describing various embodiments (particularly in the context of the following claims) to encompass both the singular and the plural, unless otherwise specified in the specification or clearly contradicted by the context.

Hereinafter, various embodiments will be described in detail with reference to the accompanying drawings. The detailed descriptions to be disclosed with the accompanying drawings are provided to describe examples of various embodiments without describing a unique embodiment.

Specific terms that are used in various embodiments are provided to help understand various embodiments, and use of these specific terms may be changed in other ways without departing from the technical spirit of various embodiments.

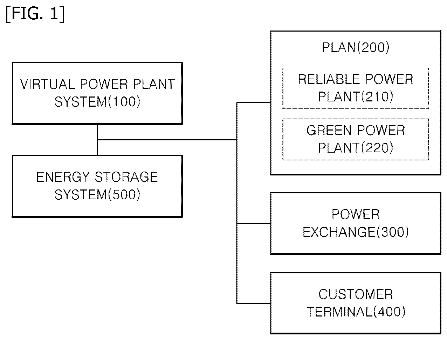

FIG. 1 is a diagram schematically illustrating a network environment in which a Virtual Power Plant (VPP) system 100 according to an embodiment of the present disclosure is connected.

Referring to FIG. 1, the virtual power plant system 100 can transmit and receive signals or data to and from a power plant 200, a power exchange 300, a consumer terminal 400, and an energy storage system 500 through a network.

The virtual power plant system 100 may be configured to allow individual consumers to perform Self Demand Response (Self-DR) even without a power exchange. The system can analyze, in real time, power demand, price, and the charging and discharging states of an energy storage system through linkage with an artificial intelligence unit 120 and a power management unit 140, and can generate and execute an optimal power trading strategy on the basis of the analysis.

The virtual power plant system 100 can collect power usage data from the consumer terminal 400 and electricity price data from the power exchange 300. The virtual power plant system 100 can forecast peak-price periods using an artificial intelligence model, and can perform self-demand response scheduling on the basis of the forecast.

The virtual power plant system 100 can collect weather data and can forecast the power generation amount of a green power plant 220 using an artificial intelligence model. The virtual power plant system 100 can provide energy storage (charging/discharging) scheduling by comparing power generation forecast data and power demand forecast data, and can generate power price forecast data.

The power plant 200 may include a reliable power plant 210 and a green power plant 220. The reliable power plant 210 may refer to a power plant capable of stably generating power regardless of weather. For example, a thermal power plant or a nuclear power plant may fall under this category. The reliable power plant 210 may include a fuel supply unit, a generator, and a control unit. The fuel supply unit can stably supply fossil fuel or nuclear fuel. The generator can convert thermal energy generated from fuel combustion or nuclear reactions into electrical energy. The control unit can monitor the state of the power plant in real time and can control the output power.

The green power plant 220 may include power plants based on green power sources that generate power depending on climate variations. For example, solar power plant, wind power plant, and hydroelectric power plant may fall under this category. The green power plant 220 can convert solar energy, wind energy, or kinetic energy of water into power. The green power plant 220 can store the generated power and supply it when necessary. The green power plant 220 can transmit the stored power to the power exchange 300 or to the virtual power plant system 100.

The power exchange 300 may include various power trading markets, such as a capacity market where power is traded on a monthly or yearly basis, and a power market where power is traded on an hourly or daily basis. The power exchange 300 can manage power trading between the power plant 200 and consumers. The power exchange 300 may include a trading management unit 310, a trading database 320, and a trading communication unit 330. The trading management unit 310 can record power received from the reliable power plant 210 and the green power plant 220 in real time, provide it for trading, and allocate it to the consumer terminal 400. The trading database 320 can analyze power consumption amount, power generation amount, and price information, and process power trading data in real time. The trading communication unit 330 can exchange data with the power plant 200, the virtual power plant system 100, and the consumer terminal 400.

The consumer terminal 400 may be a device that is connected to the virtual power plant system 100, monitors the consumer's power usage state, and receives and executes a consumer-customized schedule. The consumer terminal 400 may include a processor, a memory, a communication module, and a display.

The processor of the consumer terminal 400 can process data received from the outside and execute commands. The processor of the consumer terminal 400 can analyze a customized schedule transmitted from the virtual power plant system 100 and generate an execution plan suitable for the consumer. The processor of the consumer terminal 400 can analyze power consumption data in real time and generate a warning message in the event of an abnormal situation.

The memory of the consumer terminal 400 can store power usage data, schedule information, and user settings. The memory of the consumer terminal 400 may include volatile and non-volatile memories. The memory of the consumer terminal 400 can store historical power consumption record and schedule data, and can be used to learn repetitive patterns or provide user-specific recommendations.

The communication module of the consumer terminal 400 can support a network connection capable of transmitting and receiving data to and from the virtual power plant system 100. The communication module of the consumer terminal 400 can be connected in real time to the power management unit 140 and the scheduling unit 150 to be described below through Wi-Fi, LTE, or other wireless communication technologies. The communication module of the consumer terminal 400 can also receive notifications transmitted from a notification unit 170 to be described below, and can transmit user input data. The display of the consumer terminal 400 can provide a user interface and visually display schedule information, power consumption state, estimated cost, etc. The display of the consumer terminal 400 allows a user to input commands such as setting schedule priorities and activating an energy-saving mode through a touch screen. The display of the consumer terminal 400 can display warning and suggestion messages received from the notification unit 170 to be described below. The touch display may be a liquid crystal display (LCD) panel, an organic light emitting diode (OLED) panel, etc. The touch display may also include a touch screen panel (TSP) that includes touch electrodes for detecting touches on the display panel. In an embodiment, the touch display may be of an in-cell type in which a display panel and a touch panel are integrally combined. However, this is merely an example, and embodiments of the present disclosure are not limited thereto. The touch display can electrically detect contact from a finger, a pen, etc., can generate an electrical signal and transmit the signal to the processor.

The energy storage system 500 can store power, supply it when necessary, monitor a battery state, and manage optimized energy flow under the control of the virtual power plant system 100. The energy storage system 500 can check temperature, voltage, state of charge (SOC), state of health (SOH), etc. in real time, detect emergency states, and transmit and receive data to and from the virtual power plant system 100 and external systems. The configuration and operation of the energy storage system 500 will be described in detail below.

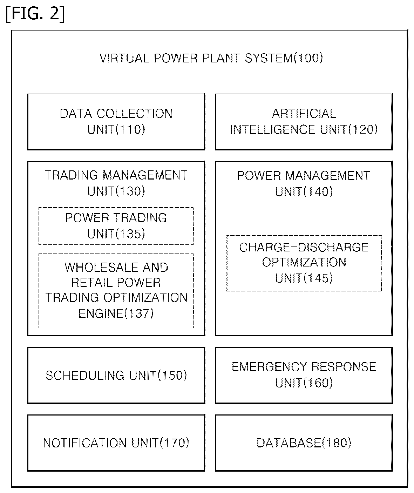

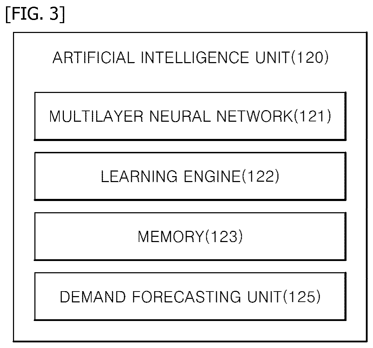

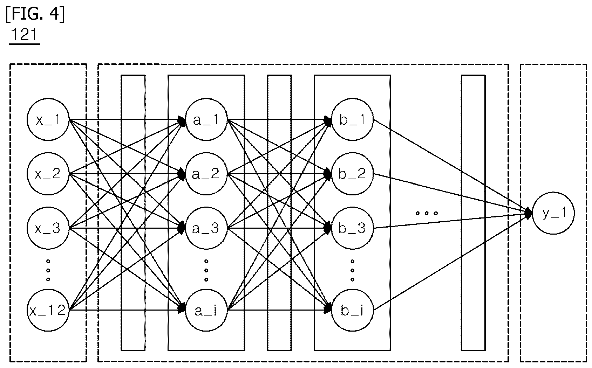

FIG. 2 is a block diagram for describing the configuration of the virtual power plant system 100 of FIG. 1, FIG. 3 is a block diagram for describing the configuration of the artificial intelligence unit 120 of FIG. 2, and FIG. 4 is a diagram exemplarily showing the multilayer neural network 121 of FIG. 3.

In an embodiment, the virtual power plant system 100 may be designed to perform at least one function of power demand forecasting, charging/discharging scheduling of the energy storage system 500, P2P power trading, and strategy formulation for wholesale and retail market trading.

Referring to FIG. 2, a data collection unit 110 of the virtual power plant system 100 can collect power consumption data, power generation data, weather data, and power price data from external devices (e.g., the power plant 200, the power exchange 300, etc.).

The power consumption data may include information on the real-time power consumption amount and time-based consumption pattern of a consumer that are obtained through the consumer terminal 400 and a smart meter.

The power generation data may include power data received from the power plant 200. The power generation data may include reliable power data received from the reliable power plant 210 and green power data received from the green power plant 220.

Weather data can be collected through weather observation stations (not shown) or the Korea Meteorological Administration API (not shown), and may include data such as weather forecast, wind direction, and solar radiation.

Electricity price data can be collected from the power exchange 300 and may include time-based electricity price data.

The artificial intelligence unit 120 can discover patterns and generate models by learning multiple data including power consumption data, power generation data, weather data, and electricity price data through machine learning and deep learning algorithms.

Referring to FIG. 3, the artificial intelligence unit 120 may include a multilayer neural network 121, a learning engine 122, and a memory 125.

The learning engine 122 can perform supervised pre-training on the multilayer neural network 121 using a plurality of training data. A multilayer neural network is a forecasting model implemented in software or hardware that mimics the computational capability of biological systems using a large number of artificial neurons (or nodes).

The learning engine 122 can perform supervised learning on the multilayer neural network 121 using training data that includes input data and ground truth data so that the multilayer neural network 121 can generate accurate forecast values on the basis of a plurality of training data.

Here, supervised learning refers to learning that finds output values corresponding to given input values using data with input values and corresponding output values as training data, and it means learning performed with known ground truth. The set of input and output values provided in supervised learning is called training data.

The memory 123 can store various data that is used by at least one component of the artificial intelligence unit 120. The data may include, for example, software, and input data or output data related to relevant commands. The memory 120 may include a volatile memory or a nonvolatile memory.

A demand forecasting unit 125 may be implemented as a component of the artificial intelligence unit 120 and can analyze individual consumers' power consumption data and forecast short-term and long-term demand using AI models based on Long Short-Term Memory (LSTM) and Transformer. The demand forecasting unit 125 can generate consumer-customized demand forecast information using weather data, a consumers' power usage history, a time-based pattern, etc. as inputs. Such demand forecast information is linked with the scheduling unit 150 and the power management unit 140 to be described below, and is provided as fundamental data for establishing self-demand response strategies.

Referring to FIG. 4, the multilayer neural network 121 may include an input layer, one or more hidden layers, and an output layer.

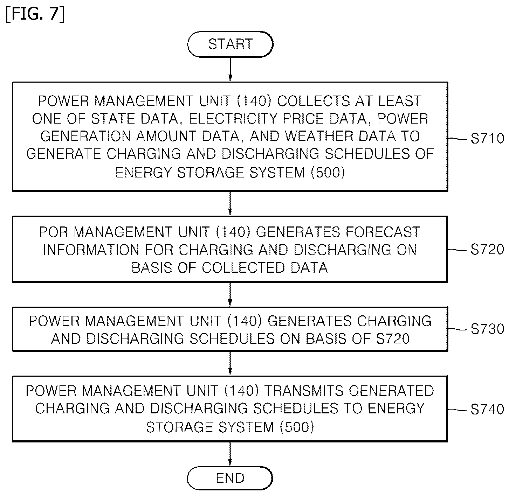

In an embodiment, the multilayer neural network 121 may include: an input layer that receives input values and includes nodes corresponding to the number of components in a first feature vector; a first hidden layer that multiplies each output value of the input layer by a weight and adds a bias to output a result; a second hidden layer that multiplies each output value of the first hidden layer by a weight and adds a bias to output a result; and an output layer that multiplies each output value of the second hidden layer by a weight and outputs the result using an activation function. Although only two hidden layers are illustrated in FIG. 7, one or more hidden layers may include additional hidden layers beyond the first and second hidden layers.

For example, the activation function may be a Softmax function; however, embodiments of the present disclosure are not limited thereto, and the activation function may be various other functions such as a LeRU function. The weights and biases may be continuously updated through supervised learning.

Specifically, the output vector may be input to a loss function layer connected to the output layer. The loss function layer can output a loss value using a loss function that compares an output vector with a ground truth vector corresponding to each training data. The parameters of the multilayer neural network 121 may be learned through supervised learning in a direction that reduces the loss value.

Referring to FIG. 2 again, the virtual power plant system 100 may include a trading management unit 130. The trading management unit 130 may include a power trading unit 135 and a wholesale and retail power trading optimization engine 137.

The power trading unit 135 may be implemented on the basis of smart contracts and can automatically perform peer-to-peer (P2P) power trading so that consumers can buy and sell power directly without the power exchange 300. The power trading unit 135 can calculate optimal trading timing and prices on the basis of electricity price data and supply/demand data, and can automatically execute buy or sell orders through smart contracts. For example, when a surge in electricity prices is forecast, the system may be set to automatically sell power, and may execute storage or purchase strategies during low-price periods.

The retail and wholesale power trading optimization engine 137 can serve to determine the optimal price when a consumer purchases power in a retail market or supplies generated or stored power in a wholesale market. This engine can establish a customized strategy for each consumer by considering consumer preferences (e.g., carbon reduction, cost savings), price sensitivity, the state of the energy storage system 500, and the amount of power available for supply. In a retail market, the engine can propose an automated purchasing strategy on the basis of user settings, and in a wholesale market, it can execute an optimized selling strategy using distributed energy resources (DER) and the energy storage system 500.

The trading management unit 130 analyzes electricity price data received from the power exchange 300 and power generation data received from the reliable power plant 210 and the green power plant 220 of the power plant 200, and aggregates weather data provided from an external server, thereby being able to calculate supply and demand. The trading management unit 130 can forecast an appropriate electricity price on the basis of these data and generate and transmit a smart contract to the power exchange 300.

In an embodiment, the trading management unit 130 can receive time-based electricity price data from the power exchange 300 and can collect reliable power generation data from the reliable power plant 210 and green power generation data from the green power plant 220 in real time.

Subsequently, the trading management unit 130 can forecast the expected power generation of the green power plant 220 by analyzing weather data (such as solar radiation and wind speed), and can calculate the time-based supply-demand imbalance on the basis of demand data provided from the scheduling unit 140.

The trading management unit 130 can adjust the electricity price in a way to minimize a supply-demand difference. The trading management unit 130 can generate a smart contract to be transmitted to the power exchange 300. For example, when there is excess power, the price can be lowered to induce demand, and when there is a supply shortage, the price can be raised to induce generation.

A smart contract, which is a computerized trading agreement that autonomously executes the necessary elements of a contract through code, on the basis of the coding principle "Code is law", is a technology that records the agreed terms between contracting parties as program code, and automatically executes the corresponding contract terms by running the program code when the contract conditions are satisfied. By using a programming language to pre-code contract duration, amounts, conditions, etc., any type of contract, such as real estate transaction, used car sales, and trade agreement, can be made to be executed automatically.

In the specification, the smart contract may include a smart buying contract that purchases power from the power exchange 300 and a smart selling contract that sells power to the power exchange 300.

In another embodiment, the trading management unit 130 can receive weather data in real time through an external server. The trading management unit 130 can analyze the weather data using the model of the learning unit 120 and can forecast changes in power generation according to weather variations. The trading management unit 130 can generate a smart contract reflecting a utilization plan of storage resources, including discharging of the energy storage system, when forecasted power generation decreases. Further, in the event of a supply shortage, it can secure additional power from a power market by setting a high price when supply is insufficient.

In another embodiment, the trading management unit 130 can receive real-time electricity price data from the power exchange 300 and analyze the current power trading situation on the basis of the data. The trading management unit 130 can calculate an appropriate electricity price in real time on the basis of power generation data and electricity price data. The trading management unit 130 can generate an optimal smart contract for selling or storing power, depending on real-time market price fluctuations, and can transmit the contract to the power exchange 300.

In another embodiment, the trading management unit 130 can identify the current amount of stored power and the dischargeable capacity by collecting state data of the energy storage system. The trading management unit 130 can forecast appropriate time periods for discharging the energy storage system and establish a pricing adjustment strategy to maximize the use of the stored power. The trading management unit 130 generates a smart contract that reflects a discharge plan of the energy storage system and transmits it to the electricity exchange 300, thereby being able to maximize utilization of the energy storage system.

The power management unit 140 can control overall operations such as charging and discharging of the energy storage system 500. The power management unit 140 can generate distributed power information on the basis of data received from the energy storage system 500. It generates charging/discharging schedule information and transmits it to the energy storage system 500, thereby being able to control the energy storage system 500.

The trading management unit 130 can receive power demand data from the power exchange 300 and, on the basis of this data, can request distributed power information from the power management unit 140. The trading management unit 130 can generate a smart contract on the basis of the distributed power information provided from the power management unit 140.

The power management unit 140 can receive data from the power plant 200 and monitor the power generation state of the green power plant 220 and reliable power plant 210 in real time. Further, the power management unit 140 can generate charging and discharging schedule information on the basis of the power generation state and transmit it to the energy storage system 500.

The power management unit 140 can generate distributed power information including information such as a power generation capacity and a generation rate of power sources of the power plant 200, and a maximum charging capacity and a charging rate of the energy storage system 500. In this case, the distributed power information may refer to data representing power generation, storage, and consumption state related to distributed energy sources (green power plant 220, reliable power plant 210, and energy storage system 500) in the virtual power plant system 100. The distributed power information may include information about time-based power generation of the reliable power plant 210, power generation efficiency relative to fuel consumption, the operation state and maintenance requirements of the power plant, and the maximum power supply available during specific time periods.

Further, distributed power information may include information about the power generation amount of the green power plant 220 forecasted on the basis of time-based solar and wind power generation amount of the green power plant 220, solar radiation of weather data, wind speed, etc.

Distributed power information may include power state data of the energy storage system 500. Power state data may include information on at least one of State of Charge (SOC), a current charge rate (0~100%), a maximum chargeable capacity, a charging rate (kW or MW), a maximum dischargeable capacity, a current dischargeable capacity, an energy loss ratio during discharging, and State of Health (SOH).

Distributed power information may also include at least one of time-based power consumption amount, consumption data for peak and off-peak periods, data of each consumption device, consumption pattern data, and consumer preference and setting data (e.g., cost-saving priority, carbon emission reduction) collected from the consumer terminal 400.

The power management unit 140 may include a charge-discharge optimization unit 145. The charge-discharge optimization unit 145 can monitor the state of the energy storage system 500 in real time and optimize charge-discharge strategies using AI-based reinforcement learning algorithms. Specifically, the charge-discharge optimization unit 145 can generate a charge-discharge policy that charges when an electricity price is low and discharge during high-price periods, using reinforcement learning algorithms including Deep Q-Network (DQN), Proximal Policy Optimization (PPO), and Linear Programming. In this case, the charge-discharge optimization unit 145 can determine a charge-discharge capacity and a time period on the basis of data such as State of Charge (SOC) and State of Health (SOH) provided from the state monitoring unit 540.

In an embodiment, the trading management unit 130 and the power management unit 140 can optimize power trading and storing strategies by operating complementarily. The trading management unit 130 can derive an optimal power trading strategy by analyzing electricity price data and supply-demand data and can automatically execute trade using a smart contract. Accordingly, it is possible to forecast electricity price fluctuations in specific time periods and execute a strategy to purchase or store power when a price is low, and sell power when a price rises.

The power management unit 140 can optimize the charging and discharging schedules of the energy storage device 500 on the basis of the trading strategy provided from the trading management unit 130, monitor the state of the energy storage device 500 in real time, and determine optimal charging and discharging policies using reinforcement learning algorithms. For example, if the trading management unit 130 forecasts a future rise in power price and decides to store power in the energy storage device 500, the power management unit 140 can adjust the optimal charging time and rate by taking into account the state of charge (SOC) and the state of health (SOH) of the energy storage device 500. On the contrary, if a drop in power price is expected, it adjusts discharging of the energy storage device 500 so that optimal profit can be generated. Through this cooperative structure, the virtual power plant system 100 can maximize economic feasibility and efficiency, and effectively manage fluctuations in the energy market.

The power management unit 140 can generate charging and discharging schedules for the energy storage system 500 on the basis of distributed power information (e.g., power demand data and power generation state).

The scheduling unit 140 can forecast at least one of a consumer energy demand amount, the power generation amount of power plants, and power state data of the energy storage system using a model of the artificial intelligence unit 120. The scheduling unit 140 can forecast demand by reflecting the time-based power consumption pattern and preference of a consumer. The scheduling unit 140 can also forecast power supply by forecasting green power generation

7

amount data, such as solar and wind, on the basis of weather data. The scheduling unit 140 can simulate various power selling or power storage strategies on the basis of the forecasted data. The scheduling unit 140 can set schedule priorities according to user preferences. The scheduling unit 140 can generate consumer-customized schedule information on the basis of the forecasted data.

The scheduling unit 150 can collect power demand data from the consumer terminal 400 and receive electricity price data from the power exchange 300. In this case, the power demand data includes peak period demand data and off-peak period demand data, and the electricity price data may include peak period price data and off-peak period price data.

The scheduling unit 150 can generate consumer-customized schedule information by analyzing power demand data and electricity price data. Schedule information includes schedules for various purposes and may include a schedule for reducing a peak period cost, a schedule for maximizing the use of green power generation, a schedule for energy saving, a schedule for reducing carbon emissions, and a schedule reflecting user preferences.

The scheduling unit 150 can generate a schedule that suggests restricting the use of non-essential devices during peak periods or operating home appliances during off-peak periods, on the basis of time-based consumption data. For example, the electric vehicle charging schedule may be set to avoid peak periods and enable charging during daytime hours with a high solar generation amount or during off-peak periods.

The scheduling unit 150 can also generate a schedule that encourages energy consumption or storage during periods when renewable energy is abundant, using power generation amount data from green power generation sources (the green power plant 220). For example, during periods when renewable energy is insufficient, it is possible to perform control to discharge stored energy from the energy storage system 500, and during periods when renewable energy is abundant, it is possible to provide a charging schedule to the power management unit 140 to store energy.

The scheduling unit 150 can provide a schedule that reflects an event-based consumption pattern on the basis of the power usage history of a customer. For example, it is possible to generate a schedule that adjusts the operating hours of HVAC systems on holidays or limits the use of home appliances during certain time periods on weekends.

That is, the scheduling unit 150 can transmit optimized schedule information to the consumer terminal 400 on the basis of electricity price data and power demand data, whereby it is possible to support a consumer in achieving cost savings, energy conservation, and carbon emission reduction.

An emergency response unit 160 can detect emergency states in real time by collecting power demand data, electricity price data, and external weather data in cooperation with the power management unit 140, the scheduling unit 150, and the trading management unit 130, in order to maintain the stability of the virtual power plant system 100.

Here, the "emergency state" may include at least one of a power plant failure, a surge in power demand, and a worsening weather condition. The emergency response unit 160 classifies emergency states, and can adjust the charging and discharging states of the energy storage system 500 or transmit a command to restrict the use of non-essential devices to the consumer terminal 400, depending on the situation. The emergency response unit 160 can determine whether an emergency state has occurred on the basis of at least one of power demand data, power generation amount data, and weather data.

For example, the emergency response unit 160 can activate discharging of the energy storage system 500 and execute a strategy of purchasing additional power through the power trading management unit 130 in a situation of surging power demand. Further, when the power generation amount of green power generation is drastically reduced due to worsening weather conditions, it is possible to compensate for the power shortage by increasing the output of the reliable power plant 210.

The emergency response unit 160 provides the result of the emergency state response to the artificial intelligence unit 120, thereby being able to improve the automatic response capability to the emergency state and maximize the reliability of the virtual power plant system 100.

A notification unit 170 can notify users and an administrator of the system state and abnormal situations in real time.

The notification unit 170 can generate and transmit notifications for each situation on the basis of real-time data generated and collected from various components of the virtual power plant system 100. Here, the notifications may include an emergency state notification, a schedule execution state notification, a trading state notification, and a forecast notification.

When an emergency state is detected, the notification unit 170 can transmit a notification including the cause of the emergency state, the affected components, and proposed actions to the administrator and users. For example, when the power generation amount of the reliable power plant 210 drastically decreases, the notification unit 170 can transmit a notification to an administrator terminal stating "Reliable power plant output decrease: 50% output reduction, immediate inspection required."

Further, the notification unit 170 can transmit the execution state of the customer-customized schedule generated by the scheduling unit 150 to the user terminal 400. For example, a notification such as "Electric vehicle charging is scheduled to begin at 10 p.m. tonight. Estimated charging cost: 3,000 KRW." may be included.

The notification unit 170 can transmit notifications to various targets such as an administrator terminal, the consumer terminal 400, and the power exchange 300, whereby it can provide both user convenience and system stability.

The notification unit 170 is responsible for real-time information delivery of the virtual power plant system 100 and can enhance the response capabilities of users and an administrator through abnormal state detection, a schedule execution state notification, and trading state reporting.

The database 180 can classify and store data generated or collected from various components of the virtual power plant system 100, such as power consumption data, power generation amount data, weather data, electricity price data, power demand data, and distributed power information. The database 180 may have a general data structure implemented in a storage space (hard disk or memory) of a computer system using a database management program (DBMS). The database 180 may have a data storage format capable of freely performing retrieval (extraction), deletion, editing, and addition of data. The database 180 may be implemented in accordance with the purpose of an embodiment of the present disclosure, using a relational database management system (RDBMS) such as Oracle, Informix, Sybase, and DB2, an object-oriented database management system (OODBMS) such as Gemstone, Orion, and O2, or an XML native database such as Excelon, Tamino, and Sekaiju, and may have appropriate fields or elements to perform its functions.

The virtual power plant system 100 may have the same configuration as a common web server or WAP server in terms of hardware. However, in terms of software, it may include a program module that is implemented using languages such as C, C++, Java, Visual Basic, and Visual C and performs various functions. In addition, the virtual power plant system 100 generally refers to a computer system that is connected, via an open computer network such as the Internet, to an unspecified number of clients and/or other servers, receives task execution requests from clients or other servers, and derives and provides the corresponding task results, and computer software (server program) installed for the computer system. Further, the virtual power plant system 100 should also be understood as a broad concept that, in addition to the above-described server program, includes a series of application programs operating on the virtual power plant system 100 and, in some cases, various databases (hereinafter referred to as "DB") established internally or externally.

Here, the network means a connection structure capable of exchanging information between nodes such as terminals and servers or a network connecting the virtual power plant system 100 and a smart factory control device 300. The network includes, but is not limited to, the Internet, Local Area Network (LAN), Wireless LAN, Wide Area Network (WAN), Personal Area Network (PAN), 3G, 4G, LTE, 5G, and Wi-Fi. The network may be a closed network such as LAN or WAN, but it is preferable to be an open network such as the Internet. The internet means a worldwide open type computer network structure that provides TCP/IP protocol and various services in an upper hierarchy, that is, HTTP (HyperText Transfer Protocol), Telnet, FTP (File Transfer Protocol), DNS (Domain Name System), SMTP( Simple Mail Transfer Protocol), SNMP (Simple Network Management Protocol), NFS (Network File Service), and NIS (Network Information Service).

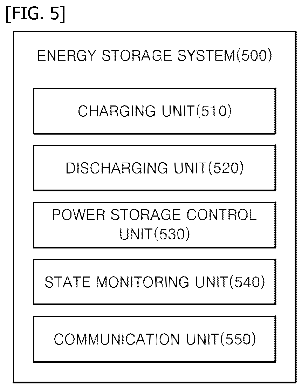

FIG. 5 is a block diagram for describing the structure of the energy storage system 500 of FIG. 1.

Referring to FIG. 5, the energy storage system 500 may include a charging unit 510, a discharging unit 520, a power storage control unit 530, a state monitoring unit 540, a communication unit 550, and a control unit 560 to store energy and supply it when necessary. In one embodiment, in the energy storage system 500, some of these components may be omitted or one or more other components may be added.

The charging unit 510 can perform the function of storing energy in the energy storage system 500. The charging unit 510 can charge a battery using power generated by the power plant 200 or surplus power from a power grid. The charging unit 510 can analyze input power and adjust charging voltage and current depending on the battery state to optimize charging rate and efficiency,

The discharging unit 520 can supply the energy stored in the energy storage system 500 to the outside as needed. The discharging unit 520 can discharge the stored energy in response to increased demand in the power grid, thereby being able to maintain the stability of the power grid. The discharging unit 520 can minimize energy loss by adjusting output voltage and current in real time during discharging.

The energy storage control unit 530 can manage the energy storage state of the energy storage system 500. The energy storage control unit 530 can monitor, in real time, the battery state (state of charge, temperature, capacity degradation rate, etc.) and store the data. The energy storage control unit 530 can manage and coordinate the overall operation of the energy storage system 500. The energy storage control unit 530 can optimize the energy flow by controlling the charging unit 510 and the discharging unit 520. The energy storage control unit 530 can receive data from the state monitoring unit 540 and switch the system to a safe mode when an emergency state occurs.

The state monitoring unit 540 can inspect the overall state of the energy storage system 500 in real time. The state monitoring unit 540 can measure and record temperature, voltage, current, State of Charge (SOC), State of Health (SOH), etc. The state monitoring unit 540 can detect emergency states (e.g., overcharge, over-discharge, high-temperature state) and generate notifications.

The communication unit 550 can handle data transmission and reception between the energy storage system 500 and the virtual power plant system 100, the power exchange 300, or other external systems.

The communication unit 550 can transmit charging and discharging state and storage state data to the virtual power plant system 100. Further, the communication unit 550 can receive and execute charging/discharging commands from an external system.

In an embodiment, an example is described in which the virtual power plant system 100 determines a charging amount Ct, a discharging amount Dt, a purchase price $P_t^{buy}$, and a selling price $P_t^{sell}$.

In the specification, a power trading optimization algorithm is configured by combining AI-based demand forecasting, reinforcement learning-based charging and discharging strategies for the energy storage system 500, and a blockchain-based power trading engine. Further, an agent may refer to a learning subject that observes a current state st, selects an action at in response, applies it to an environment, and receives a reward rt as a result.

An agent according to an embodiment of the present disclosure can serve as a unit resource or node of an individual consumer within the virtual power plant system 100. The agent can be configured as a control computation module or information processing device capable of operating independently within the virtual power plant system 100. For example, the agent may be implemented as a device or software module that includes a processor, a memory, and a communication interface and can perform demand forecasting, state evaluation, action selection, and reward calculation in real time. In another embodiment, the agent may be implemented as an independent module that optimizes the operation of a distributed energy resource (DER) of an individual consumer and operates in a cooperative structure without being directly dependent on the virtual power plant system 100. The agent may be implemented as an individual module physically separated from the virtual power plant system 100, similar to the consumer terminal 400, and can analyze at least one of a power consumption pattern, the state of the energy storage system 500, and a real-time power price while exchanging information or signals with the consumer terminal 400 and the virtual power plant system 100, and perform scheduling on the basis of the analysis result.

The reinforcement learning-based power trading optimization algorithm can be defined as a structure including a state st, an action at, and a reward $r_t$, as shown in [Equation 1].

[Equation 1]

$$\left(s_t, a_t\right) \to r_t$$

In [Equation 1], st may represent the state at time t. at may represent the action at time t, and rt may represent the reward at time t.

[Equation 2]

$$a_t = arg \max_{a \in A} \mathbb{E}\left[r_t \mid s_t, a\right]$$

In [Equation 2], a may represent an action, A may represent a set of possible actions, st may represent the state at time t, and $r_t$ may represent the outcome obtained when a specific action a is taken at time t. argmax may refer to an operator that finds the value that maximizes a given expression, and E[•] may represent an expected value, which indicates an average result of probabilistic outcomes. That is, [Equation 2] may represent at that maximizes E[$r_t$|$s_t$, a]. [Equation 2] indicates a direction in reinforcement learning in which an agent selects an action that maximizes the expected reward in the current state, and can be used to learn a strategy that maximizes long-term rewards through optimal action selection.

In [Equation 2], st may represent the state at time t. Further, st may represent a state vector that includes at least one of SOCt, Lt, $P_t^{\wedge}$(buy), $P_t^{\wedge}$(sell), and forecast($L_{(t+1:t+h)}$). Here, SOCt may represent the charging state of the energy storage system at time t, and $L_t$ may represent the load demand at time t. $P_t^{\wedge}$(buy) may represent the unit price of power purchase, $P_t^{\wedge}$(sell) may represent the unit price of power sale, and forecast($L_{(t+1:t+h)}$) may represent the forecasted power demand for the next H hours.

[Equation 3]

$$a_t = arg \min_{C_t, D_t, P_t^{buy}, P_t^{sell}} \left(P_t^{buy} D_t - P_t^{sell} C_t\right)$$

In [Equation 3], $P_t^{\wedge}$(buy) may represent the unit price of power purchase at time t, $P_t^{\wedge}$(sell) may represent the unit price of power sale at time t, Ct may represent the charging amount at time t, and Dt may represent the discharging amount at time t. According to [Equation 3], at may be defined as an optimal action that is selected to minimize a trading cost, using a unit price of power purchase $P_t^{\wedge}$(buy), a unit price of power sale $P_t^{\wedge}$(sell), a charging amount Ct, and a discharging amount Dt as variables. That is, under [Equation 3], at guides cost minimization through a combination of the variables, and thus can contribute to establishing a scheduling strategy that considers economic efficiency in a real-time power market environment.

Referring again to [Equation 1] and [Equation 2], rt may represent the reward at time t. rt can generally be calculated on the basis of net profit or cost loss resulting from t.

[Equation 4]

$$r_t = -(P_t^{buy} D_t - P_t^{sell} C_t)$$

In an embodiment, rt can be defined as shown in [Equation 4]. In [Equation 4], $P_t^{\wedge}(buy)$ may represent the unit price of power purchase at time t, $P_t^{\wedge}(sell)$ may represent the unit price of power sale at time t, $C_t$ may represent the charging amount at time t, and $D_t$ may represent the discharging amount at time t.

As described above, rt functions as numerical feedback provided in accordance with the outcome of the agent's action, and therefore can substantially contribute to the reinforcement learning agent's learning of a better action policy in the future.

Further, as described above, according to [Equations 1] through [Equation 4], st provides fundamental information for the agent to recognize the current environment state and establish a strategy, and therefore can effectively contribute to setting a reinforcement learning-based charging/discharging and power trading optimization policy. Here, the state st may include the current state of charge $SOC_t$ of the energy storage system 500, a load demand Lt, a power trading price $P_t^{\wedge}buy$ and $P_t^{\wedge}sell$, a future demand forecast value $forecast(L_{(t+1:t+h)})$, etc. The action at may be implemented as setting a charging amount Ct, a discharging amount Dt, and the power purchase and sale prices.

In an embodiment, the state of the energy storage system 500 can be updated in accordance with the following [Equation 5].

[Equation 5]

$$SOC_{t+1} = SOC_t + \eta_C C_t - \frac{D_t}{\eta_D}$$

[Equation 5] is an equation for calculating the state of charge of the energy storage system 500 according to an embodiment of the present disclosure. In [Equation 5], SOCt may represent the state of charge of the energy storage system at time t, $\eta_c C_t$ may represent a charging efficiency, Ct may represent the amount of power charged at time t, Dt may represent the amount of power discharged at time t, and $\eta_D$ may represent a coefficient for compensating the power actually available for external supply by reflecting the loss during discharging from the internal energy of the energy storage system.

Here, $\eta_c$ is a coefficient that reflects the actual amount of power stored by taking into account the loss during charging, and $\eta_D$ is a coefficient that compensates the power available for external supply from the internal energy of the energy storage system 500 by reflecting the loss during discharging. Since the state of the energy storage system 500 changes as charging and discharging are repeated over time, as described above, [Equation 5] enables forecasting of SOC at the next time point, whereby it is possible to contribute to the reinforcement learning agent's ability to select strategic actions based on the remaining energy.

In an embodiment, a market equilibrium condition for P2P power trading can be defined as shown in the following [Equation 6].

[Equation 6]

$$\sum_t P_t^{sell} = \sum_t P_t^{buy}$$

[Equation 6] is an equation representing the equilibrium condition of power purchase and sale amounts over the entire time period. In [Equation 6], $P_t^{\wedge}(sell)$ may represent the amount of power sold by a seller at time t. $P_t^{\wedge}(buy)$ may represent the amount of power purchased by a buyer at time t. According to [Equation 6], since the sold amount and purchased amount within the P2P power trading must always be kept equal, it can contribute to securing real-time balance of power supply and demand in the market.

In an embodiment, the reinforcement learning agent can be trained by the following [Equation 7].

[Equation 7]

$$\min_{\{P_t^{buy}, P_t^{sell}, C_t, D_t\}} \sum_{t=1}^{T} \left( P_t^{buy} D_t - P_t^{sell} C_t \right)$$

[Equation 7] is an objective function for minimizing a total cost. In [Equation 7], $P_t^{\wedge}(buy)$ may represent the unit price of power purchase at time t. $D_t$ may represent the amount of power discharged at the corresponding time. $P_t^{\wedge}(sell)$ may represent the unit price of power sale at time t, and $C_t$ may represent the amount of power charged at the corresponding time. According to [Equation 7], by reflecting the cost incurred during charging and the revenue obtained during discharging, the total power trading cost can be minimized, which can effectively contribute to enabling the reinforcement learning agent to learn an optimal charging/discharging and trading strategy.

In this case, a power demand satisfaction condition can be defined as the following [Equation 8].

[Equation 8]

$$D_t - C_t = L_t, \ \forall t$$

[Equation 8] is an equation that represents a constraint for satisfying time-based load demand. In [Equation 8], Dt may represent the amount of power discharged at time t. $C_t$ may represent the amount of power charged at time t, and $L_t$ may represent the actual load power demand at time t.

In an embodiment, a charge/discharge limit condition for reflecting the technical constraints of the energy storage system 500 can be defined as the following [Equation 9].

[Equation 9]

$$0 \leq C_t \leq C_{max}, \ 0 \leq D_t \leq D_{max}$$

[Equation 9] is an equation that represents the charging and discharging limit conditions of the energy storage system 500. In [Equation 9], $C_t$ may represent the amount of power charged at time t. $C_{max}$ may represent the maximum allowable charge amount that the charge amount at time t cannot exceed. Dt may represent the amount of power discharged at time t, and $D_{max}$ may represent the maximum allowable discharge amount that the discharge amount at time t cannot exceed. As described above, according to [Equation 9], it can be ensured that charging and discharging operations are performed within the physical limits of the energy storage system 500, so it is possible to contribute to stable power system operation.

In an embodiment, the power trading optimization system form an optimization problem that integrates the above-described objective function and constraints, and repeatedly learns the problem through a reinforcement learning-based agent, whereby it can help individual consumers perform self-demand response (Self-DR) without going through a power exchange. Accordingly, the agent can establish an optimal charging/discharging and trading strategy in real time based on power demand and price forecasting, and can simultaneously ensure both efficiency and stability of the overall power system.

In an embodiment, the power trading optimization system form an optimization problem that integrates the above-described objective function and constraints, and repeatedly learns the problem through a reinforcement learning-based agent, whereby it enables individual consumers to perform self-demand response (Self-DR) without going through a power exchange. Accordingly, the agent can establish an optimal charging/discharging and trading strategy in real time based on power demand and price forecasting, and can simultaneously ensure both efficiency and stability of the overall power system.

The method of determining a charging amount $C_t$, a discharging amount $D_t$, a purchase price $P_t^{\wedge}buy$, and a selling price $P_t^{\wedge}sell$ of the energy storage system 500 as described above can be performed by the artificial intelligence unit 120 and the power management unit 140 of the virtual power plant system 100.

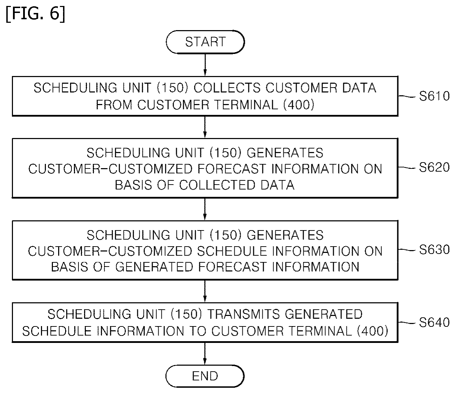

FIG. 6 is a flowchart for describing a method of generating and providing a schedule by a scheduling unit 150 according to an embodiment of the present disclosure; and

Referring to FIG. 6, in step S610, the scheduling unit 150 can collect consumer data from the consumer terminal 400. Here, the consumer data may include time-based power consumption amount, consumption device-specific usage data, and a consumer's preference. In addition, the scheduling unit 150 can receive power price data from the power exchange 300, and receive renewable energy power generation amount data and state data of the energy storage system 500 from the power management unit 140. Weather data may include data such as solar radiation and wind speed, which are required for forecasting solar power generation and wind power generation.

In step S620, the scheduling unit 150 can generate consumer-customized forecast information on the basis of the collected data. The forecast information may include time-based power consumption amounts, a consumption change according to a specific event, time-based expected costs, and a renewable energy generation amount. For example, the scheduling unit 150 can forecast time periods with a high solar power generation amount by utilizing weather data, or identify time periods with low costs on the basis of electricity price data.

In step S630, the scheduling unit 150 can generate consumer-customized schedule information on the basis of the generated forecast information. In this case, the schedule information may include at least one of a cost-saving schedule, a renewable energy utilization schedule, and an energy-saving schedule.

For example, the scheduling unit 150 can generate schedule information to guide power consumption to avoid a peak period and concentrate on an off-peak period, or to charge the energy storage system 500 during time periods with a high solar power generation amount. The scheduling unit 150 can generate customized schedule information reflecting consumer preferences as needed.

In step S640, the scheduling unit 150 can transmit the generated schedule information to the consumer terminal 400. Here, the schedule information can be visually provided through a display of the consumer terminal 400. The scheduling unit 150 can monitor the execution state of the schedule in real time, and can update the schedule information and retransmit it to the consumer terminal 400 when changes occur in power demand data, electricity price data, or weather data. For example, the scheduling unit 150 can transmit a message such as "Electric vehicle charging will start at 10:00 PM tonight. Estimated cost: 3,000 KRW" to the consumer terminal 400.

As described above, the method for generating and providing a schedule according to an embodiment of the present disclosure can optimize consumer's power consumption and increase the utilization of green generated power by analyzing the consumption time periods, and accordingly, stabilize a power grid and provide a technical effect of resource utilization based on user demand response. Accordingly, the virtual power plant system 100 can maximize energy efficiency and achieve sustainable energy management.

FIG. 7 is a flowchart for describing a method of generating charging and discharging schedules according to an embodiment of the present disclosure.

Referring to FIG. 7, in step S710, the power management unit 140 can collect at least one of state data, electricity price data, power generation amount data, and weather data in order to generate charging and discharging schedules for the energy storage system 500.

Here, the state data may include the State of Charge (SOC), State of Health (SOH), charging rate, discharging rate, and maximum charging/discharging capacity of the energy storage system 500.

The power management unit 140 can receive time-based electricity price data from the power exchange 300. Here, the electricity price data may include peak period price data and off-peak period price data.

The power management unit 140 can also collect green power generation amount data from the green power plant 220 and reliable power generation amount data from the reliable power plant 210, and collect weather data (e.g., solar irradiance and wind speed) from an external server.

In step S720, the power management unit 140 can generate forecast information required for charging and discharging on the basis of the collected data. The charging forecast information can generate forecast data to enable charging during time periods with a high renewable energy generation amount. The discharging forecast information can generate forecast data to release stored energy in response to increased peak period power demand. The cost prediction information can forecast the cost of charging and discharging by analyzing time-based electricity price data.

In step S730, the power management unit 140 can generate charging and discharging schedules on the basis of step S720. The charging schedule can be generated by selecting time periods with a high renewable energy generation amount or a low electricity price for charging the energy storage system 500. For example, charging of the energy storage system 500 can be planned during daytime hours a highest solar generation amount.

The discharging schedule can be generated to discharge power during time periods when power demand increases during peak periods or an electricity price is high. For example, it is possible to plan to supply the power discharged from the energy storage system 500 to a power grid during evening peak hours.

The power management unit 140 can generate charging and discharging schedules so as to maximize charging and discharging efficiency by utilizing various optimization algorithms.

In step S740, the power management unit 140 can transmit the generated charging and discharging schedules to the energy storage system 500. The energy storage system 500 can receive the schedule information so that the charging unit 510 and the discharging unit 520 can perform charging and discharging in accordance with the schedule.

As described above, the method of generating charging and discharging schedules according to an embodiment of the present disclosure has the effect of enhancing the stability of the energy storage system 500 and increasing the efficiency of electric energy. Further, this effect can contribute to maximizing the overall performance and sustainability of the virtual power plant system 100 including the energy storage system 500.

Further, the embodiments described above can be achieved by hardware components, software components, and/or a combination of hardware components and software components. For example, the system, mehod, and components described in the embodiments by one or more common computers or computers for specific purposes, such as a processor, a controller, an ALU (arithmetic logic unit), a digital signal processor, a microcomputer, an FPGA (field programmable gate array), a PLU (programmable logic unit), a microprocessor, or any devices that can execute instructions and give responses. A processing device can operate an operating system (OS) and one or more software applications that are executed on the operating system. Further, the processing device can access, store, operate, process, and create data in response to execution of software. For the convenience of understanding, one processor may be used, but those skilled in the art can understand that the processor may include a plurality of processing elements and/or a plurality of types of processing elements. For example, the processing device may include a plurality of processors or, one processor and one controller. Further, other processing configurations such as parallel processors are also possible.

Software can include computer programs, codes, instructions, or a combination of one or more of them, and a processor device may be configured to operate in a desired way or processors may be configured individually or collectively. Software and/or data may be analyzed by processing devices or may be permanently or temporarily embodied on any types of machines, components, physical devices, virtual equipment, computer storage media or devices, or signal waves to be transmitted. Software may be distributed to computer systems connected through a network and stored or executed in the distributed way. Software and data can be recorded on one or more computer-readable recording media.

The method according to an embodiment may be implemented in a program that can be executed by various computers and may be recorded on computer-readable media. The computer-readable media may include program commands, data files, and data structures individually or in combinations thereof. The program commands that are recorded on the media may be those specifically designed and configured for embodiments or may be those available and known to those engaged in computer software in the art. The computer-readable recording media include magnetic media such as hard disks, floppy disks, and magnetic media such as a magnetic tape, optical media such as CD-ROMs and DVDs, magneto-optical media such as floptical disks, and hardware devices specifically configured to store and execute program commands, such as ROM, RAM, and flash memory. The program commands include not only machine language codes compiled by a compiler, but also high-level language code that can be executed by a computer using an interpreter etc. The hardware device may be configured to operate as one or more software modules to perform the operation of the present invention, and vice versa.

Although embodiments were described with reference to the limited drawings, various technical changes and modifications may be possible by those skilled in the art on the basis of the above description. For example, the described technologies may be performed in order different from the described method, and/or even if components such as the described system, structure, device, and circuit are combined or associated in different ways from the description or replaced by other components or equivalents, appropriate results can be accomplished.

Therefore, other implements, other embodiments, and equivalents to the claims are included in the following claims.

**Claims**

1. A virtual power plant system that analyzes in real time at least one of power demand data, power generation amount data, electricity price data, and distributed power information and provides the result of the analysis in order to enable an individual consumer to perform self-demand response (Self-DR) using a user terminal, the virtual power plant system comprising:

   a trading management unit that calculates power demand and supply on the basis of the electricity price data, the power generation amount data received from a power plant, and weather data received from an external server, forecasts an appropriate electricity price on the basis of the calculation result, and generates a smart contract, in which the power generation amount data includes reliable power generation amount data received from a reliable power plant and green power generation amount data received from a green power plant;

   a power management unit that generates the distributed power information on the basis of at least one of the power state data received from an energy storage system, the electricity price data, the power generation amount data, and the weather data, generates charging and discharging schedule information on the basis of the distributed power information, and transmits the charging and discharging schedule information to the energy storage system; and

   a scheduling unit that an analyzes time-based power consumption pattern and a preference on the basis of power demand data and power consumption data received from a consumer terminal, generates demand forecast data, and generates a consumer-customized schedule on the basis of the demand forecast data.

2. The virtual power plant system of claim 1, wherein the trading management unit receives the electricity price data from a power exchange and transmits the smart contract to the power exchange.

3. The virtual power plant system of claim 1 or 2, further comprising:

an emergency response unit that detects in real time whether an emergency state has occurred; and
a notification unit that transmit san emergency notification to an administrator and the consumer terminal when the emergency state occurs,
wherein the emergency state includes at least one of a power plant failure, a surge in power demand, and a worsening weather condition.

4. The virtual power plant system of any one of claims 1 to 3, wherein the scheduling unit generates consumer-customized schedule information on the basis of the power demand data and the electricity price data,

the power demand data includes peak period demand data and off-peak period demand data,
the electricity price data includes price data during the peak period and price data during the off-peak period, and
the customer-customized schedule information includes a schedule for reducing costs during the peak period.

5. The virtual power plant system of claim 4, wherein the scheduling unit generates the customer-customized schedule information using a power trading optimization algorithm of an artificial intelligence unit.

[FIG. 1]

```
┌──────────────────────┐              ┌──────────────────────────────┐
│  VIRTUAL POWER PLANT │              │          PLAN(200)           │
│     SYSTEM(100)      │              │  ┌────────────────────────┐  │
└──────────┬───────────┘              │  │  RELIABLE POWER        │  │
           │                          │  │    PLANT(210)          │  │
           │                          │  └────────────────────────┘  │
┌──────────┴───────────┐              │  ┌────────────────────────┐  │
│   ENERGY STORAGE     │──────────────│  │  GREEN POWER           │  │
│     SYSTEM(500)      │              │  │    PLANT(220)          │  │
└──────────────────────┘              │  └────────────────────────┘  │
                                      └──────────────────────────────┘

                                      ┌──────────────────────────────┐
                                      │          POWER               │
                                      │       EXCHANGE(300)          │
                                      └──────────────────────────────┘

                                      ┌──────────────────────────────┐
                                      │        CUSTOMER              │
                                      │      TERMINAL(400)           │
                                      └──────────────────────────────┘
```

[FIG. 2]

VIRTUAL POWER PLANT SYSTEM(100)

| DATA COLLECTION UNIT(110) | ARTIFICIAL INTELLIGENCE UNIT(120) |

TRADING MANAGEMENT UNIT(130)

POWER TRADING UNIT(135)

WHOLESALE AND RETAIL POWER TRADING OPTIMIZATION ENGINE(137)

POWER MANAGEMENT UNIT(140)

CHARGE-DISCHARGE OPTIMIZATION UNIT(145)

| SCHEDULING UNIT(150) | EMERGENCY RESPONSE UNIT(160) |

| NOTIFICATION UNIT(170) | DATABASE(180) |

[FIG. 3]

ARTIFICIAL INTELLIGENCE UNIT(120)

MULTILAYER NEURAL NETWORK(121)

LEARNING ENGINE(122)

MEMORY(123)

DEMAND FORECASTING UNIT(125)

[FIG. 4]

121

[FIG. 5]

ENERGY STORAGE SYSTEM(500)

CHARGING UNIT(510)

DISCHARGING UNIT(520)

POWER STORAGE CONTROL
UNIT(530)

STATE MONITORING UNIT(540)

COMMUNICATION UNIT(550)

[FIG. 6]

```
                    ( START )
                        │
                        ▼
┌──────────────────────────────────────────┐
│  SCHEDULING UNIT (150) COLLECTS CUSTOMER DATA │── S610
│        FROM CUSTOMER TERMINAL (400)          │
└──────────────────────────────────────────┘
                        │
                        ▼
┌──────────────────────────────────────────┐
│        SCHEDULING UNIT (150) GENERATES       │
│ CUSTOMER-CUSTOMIZED FORECAST INFORMATION ON  │── S620
│           BASIS OF COLLECTED DATA            │
└──────────────────────────────────────────┘
                        │
                        ▼
┌──────────────────────────────────────────┐
│        SCHEDULING UNIT (150) GENERATES       │
│ CUSTOMER-CUSTOMIZED SCHEDULE INFORMATION ON  │── S630
│   BASIS OF GENERATED FORECAST INFORMATION    │
└──────────────────────────────────────────┘
                        │
                        ▼
┌──────────────────────────────────────────┐
│      SCHEDULING UNIT (150) TRANSMITS GENERATED │── S640
│ SCHEDULE INFORMATION TO CUSTOMER TERMINAL (400)│
└──────────────────────────────────────────┘
                        │
                        ▼
                    ( END )
```

[FIG. 7]

```
        ┌─────────────┐
        │    START    │
        └──────┬──────┘
               │
               ▼
┌────────────────────────────────────────┐
│ POWER MANAGEMENT UNIT (140) COLLECTS    │
│ AT LEAST ONE OF STATE DATA, ELECTRICITY │
│ PRICE DATA, POWER GENERATION AMOUNT     │──── S710
│ DATA, AND WEATHER DATA TO GENERATE      │
│ CHARGING AND DISCHARGING SCHEDULES OF   │
│ ENERGY STORAGE SYSTEM (500)             │
└────────────────────┬───────────────────┘
                     │
                     ▼
┌────────────────────────────────────────┐
│ POR MANAGEMENT UNIT (140) GENERATES     │
│ FORECAST INFORMATION FOR CHARGING AND   │──── S720
│ DISCHARGING ON BASIS OF COLLECTED DATA  │
└────────────────────┬───────────────────┘
                     │
                     ▼
┌────────────────────────────────────────┐
│ POWER MANAGEMENT UNIT (140) GENERATES   │
│ CHARGING AND DISCHARGING SCHEDULES ON   │──── S730
│ BASIS OF S720                           │
└────────────────────┬───────────────────┘
                     │
                     ▼
┌────────────────────────────────────────┐
│ POWER MANAGEMENT UNIT (140) TRANSMITS   │
│ GENERATED CHARGING AND DISCHARGING      │──── S740
│ SCHEDULES TO ENERGY STORAGE SYSTEM (500)│
└────────────────────┬───────────────────┘
                     │
                     ▼
              ┌─────────────┐
              │     END     │
              └─────────────┘
```

Europäisches
Patentamt

European
Patent Office

Office européen
des brevets

## EUROPEAN SEARCH REPORT

Application Number

EP 25 20 4861

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2010/179704 A1 (OZOG MICHAEL T [US]) 15 July 2010 (2010-07-15) * abstract; figures 1-10 * * paragraphs [0015] - [0027], [0042] - [0057], [0074] - [0205], [0227] - [0229], [0255] - [0527] * ----- | 1-5 | INV. G06Q10/04 |
| A | CN 119 151 710 A (LI ZHENGXI) 17 December 2024 (2024-12-17) * paragraphs [0001] - [0058] * ----- | 1-5 | |
| A | JOGUNOLA OLAMIDE ET AL: "Consensus Algorithms and Deep Reinforcement Learning in Energy Market: A Review", IEEE INTERNET OF THINGS JOURNAL, IEEE, USA, vol. 8, no. 6, 20 October 2020 (2020-10-20), pages 4211-4227, XP011842977, DOI: 10.1109/JIOT.2020.3032162 [retrieved on 2021-03-04] * Sections III-V * ----- | 1-5 | |

TECHNICAL FIELDS
SEARCHED (IPC)

G06Q

The present search report has been drawn up for all claims

| Place of search | Date of completion of the search | Examiner |
|---|---|---|
| The Hague | 11 December 2025 | Berlea, Alexandru |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
................................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 25 20 4861

This annex lists the patent family members relating to the patent documents cited in the above-mentioned European search report.
The members are as contained in the European Patent Office EDP file on
The European Patent Office is in no way liable for these particulars which are merely given for the purpose of information.

11-12-2025

| Patent document cited in search report | | Publication date | Patent family member(s) | | Publication date |
|---|---|---|---|---|---|
| US 2010179704 | A1 | 15-07-2010 | AU | 2010204729 A1 | 01-09-2011 |
| | | | AU | 2016210607 A1 | 25-08-2016 |
| | | | CA | 2749770 A1 | 22-07-2010 |
| | | | EP | 2387776 A1 | 23-11-2011 |
| | | | US | 2010179704 A1 | 15-07-2010 |
| | | | US | 2011035073 A1 | 10-02-2011 |
| | | | WO | 2010083334 A1 | 22-07-2010 |
| CN 119151710 | A | 17-12-2024 | NONE | | |

EPO FORM P0459

For more details about this annex : see Official Journal of the European Patent Office, No. 12/82